# EUROPEAN PATENT SPECIFICATION

(11) **EP 2 848 170 B1**
(45) Date of publication and mention of the grant of the patent: **21.11.2018**
(21) Application number: 12876163.2
(22) Date of filing: 10.05.2012
(51) Int. Cl.: A47J 43/044, A47J 43/07

(54) **FOLDING FOOD MIXER**
ZUSAMMENKLAPPBARER LEBENSMITTELMIXER
BATTEUR-MÉLANGEUR PLIABLE

(43) Date of publication of application: 18.03.2015
(73) Proprietor: Poking Industrial Dongguan Company Ltd., Dongguan, Guangdong 523700 (CN)
(72) Inventor: ZHOU, Changkeng, Dongguan Guangdong 523700 (CN)
(74) Representative: Office Kirkpatrick
(86) International application number: PCT/CN2012/075319
(87) International publication number: WO 2013/166693

(56) References cited:
- CN-A- 102 657 485
- CN-U- 201 734 586
- CN-U- 201 734 586
- CN-U- 202 636 710
- CN-Y- 2 701 378
- GB-A- 749 566
- GB-A- 749 566
- US-A- 2 086 817
- US-A- 2 599 275
- US-A- 2 599 275
- US-A- 6 068 397
- US-A- 6 068 397

## Description

### FIELD OF THE INVENTION

The present invention relates the field of kitchen appliance technologies, and in particular to, a food mixer structure improvement aspect.

### BACKGROUND OF THE INVENTION

A food mixer is a device having a mixing head driven by a motor to rotate, thus evenly mixing food in a container. At present, the categories of the food mixer mainly include: I, hand-held type, for example: application No. CN201020671920.3 hand-held mixer; II, hand-held type, for example: application No. CN200810048838.2 hand-held mixer; and III, hand-held type, for example: application No. 201020209936.2 food mixer. While the existing hand-held and table type mixer although has a small volume, and occupies a small storage space, it needs to be held in hand while being in use, which occupies the time of an operator. Moreover, long term using may also cause ache to the arms of the operator, so that the existing mixer is inconvenient to use and has poor mixing effect. The two hands of the operator may be free while using the table type mixer. However, the existing table type mixer adopts a big base and a support arm fixed on the base to support a handpiece above a container, which occupies a large space, and is not beneficial for storage. Especially the kitchen space is more precious due to the rapidly increased housing price at the present stage. Foldable table mixers have been disclosed in patent US2,599,275, in which a handpiece supporting a mixing head and comprising a motor is linked to a supporting arm, itself linked to a base and where handpiece, arm and base can be folded to enable some gain of storage space.

However, the foldable parts of such mixers are maintained in an unfolded state by the means of "stop" elements molded in the support where gravity is the only force maintaining the parts in unfolded position, without any safety concern that if a misoperation occurs, parts of the mixer may fold or move unwillingly while the motor is operating.

The applicant has addressed this problem.

### SUMMARY OF THE INVENTION

To sum up, the present invention aims at providing a folding food mixer for solving the technique defect of inconvenient use or storage of the existing food mixer.

In order to solve the proposed technical problems, the present invention as defined in independent claim 1 adopts a technical solution as follows: a folding food mixer, comprises a base, a support arm and a handpiece, wherein a mixing head is disposed on the handpiece, and a motor for driving the mixing head to rotate is disposed in the handpiece. The folding food mixer is characterized in that the bottom of the support arm is connected with the base through a folding structure, and the top of the support arm is connected with a tail end of the handpiece through a folding structure.

According to the present invention, a convex connecting head is disposed on the base, and the bottom of the support arm is movably connected with the connecting head through a first rotation shaft. An spring load self-locking device, and a support arm unlocking button for unlocking the elastic self-locking device are disposed between the connecting head and the support arm.

A knob for adjusting and controlling the operation of the handpiece is disposed on the support arm. A linkage mechanism for enabling the support arm unlocking button to be only pressed for unlocking when the knob is at an off gear or enabling the knob to be only rotated for adjusting when the elastic self-locking device is under a locked state, is arranged between the knob and the support arm unlocking button.

The linkage mechanism comprises a linkage disposed between the knob and the support arm unlocking button, and a linkage return spring for applying an elastic force on the direction of the knob is sleeved on the linkage. The knob is provided with a skirt boarder; and a concave surface against which the top end of the linkage is pushed when the knob points at the off gear, is disposed on the skirt boarder. When the top end of the linkage is pushed on a non-concave surface on the skirt boarder of the knob, the bottom end of the linkage is blocked on the pressing direction of the support arm unlocking button.

The first rotation shaft is a hollow shaft. The elastic self-locking device comprises a locking pin. The tip of the locking pin is connected with the inner side of the support arm unlocking button through the first rotation shaft. The side wall of the tail of the locking pin is provided with a convex position-limiting block and a locking piece. A position-limiting slot matched with the position-limiting block and limiting the locking pin and a shell of the support arm to only move along the axial direction of the first rotation shaft, is disposed on the inside of the shell of the support arm. A locking pin return spring is disposed between the shell of the support arm and the tail of the locking pin. A locking slot matched with the locking piece of the locking pin when the support arm is vertically erected, for limiting the support arm to rotate, is disposed on the wall of the shaft hole of the connecting head.

The top of the support arm is movably connected with the tail end of the handpiece through a second rotation shaft; moreover, the first rotation shaft and the second rotation shaft are under a parallel state. The height of the support arm is larger than or equal to the length of the handpiece.

A handpiece locking mechanism is further disposed between the top of the support arm and the tail end of the handpiece. The handpiece locking mechanism comprises a latch finger disposed in the handpiece, and a handpiece unlocking button. The front end of the latch finger protrudes out of the handpiece and is matched and locked with the support arm. The tail end of the latch finger is provided with a latch finger return spring. The handpiece unlocking button is exposed outside the handpiece. A beveling block for pushing the front end of the latch finger to retract in the handpiece in a beveling way is disposed between the handpiece unlocking button and the latch finger.

The mixing head comprises a left mixing head and a right mixing head which rotate synchronously. A worm is connected onto a crankshaft of the motor. The left side and the right side of the worm are respectively engaged with a left worm wheel and a right worm wheel. The left mixing head and the right mixing head are respectively spliced in a hollow wheel axle of the left worm wheel and a hollow wheel axle of the right worm wheel. Moreover, a buffer spring is disposed in the hollow wheel axle.

A rotary tray is disposed on the position of the base corresponding to the mixing head.

A protective cover matched with the base to cover the support arm and the handpiece after the support arm and the handpiece are folded and horizontally placed on the base.

The folding food mixer has the advantageous effects that: in the folding food mixer, the support arm is connected with the base through the folding structure, and the support arm is connected with the handpiece through the folding structure; the handpiece and the support arm can be folded and adhered to the base, so that storage space in a non-use state is reduced, and hands will be free in use, and the usage is convenient. In addition, the linkage mechanism can avoid abnormal operations, and prevent occurrence of safety accidents or damage of the motor. The protective cover can package the folded support arm and handpiece, so as to prevent dust and oil fume pollution.

### BRIEF DESCRIPTION OF DRAWINGS

FIG. 1 is a stereostructure schematic view of the present invention while in use;
FIG. 2 is a structural view of a handpiece under an uplifting state of the present invention while in use;
FIG. 3 is a stereostructure schematic view of the handpiece under a slightly uplifting state of the present invention;
FIG. 4 is a stereostructure schematic view of the handpiece under a folded state of the present invention;
FIG. 5 is a stereostructure schematic view of the present invention under a completely folded state;
FIG. 6 is a stereostructure schematic view of the present invention under a completely folded state during packaging of a protective cover;
FIG. 7 is a decomposition structure schematic view of the present invention;
FIG. 8 is a decomposition structure schematic view of the present invention at another angle;
FIG. 9a is a stereostructure schematic view of a second group of mixing head for being installed on the handpiece of the present invention;
FIG. 9b is a stereostructure schematic view of a third group of mixing head for being installed on the handpiece of the present invention;
FIG. 10 is a stereostructure schematic view of a container placed on a rotary tray of the present invention;
FIG. 11 is a front structure view of the present invention when a handpiece is folded and a knob is at an off gear;
FIG. 12 is an inner side structure view of the knob in FIG. 11;
FIG. 13 is an A-A section structure view of FIG. 11;
FIG. 14 is a front structure view of the present invention when a handpiece is folded and a knob is at a non-off gear; and
FIG. 15 is a B-B section structure view of FIG. 14.

### DETAILED DESCRIPTION OF THE EMBODIMENTS

The structure of the present invention will be further described hereinafter with reference to the drawings and the preferred specific embodiments of the present invention.

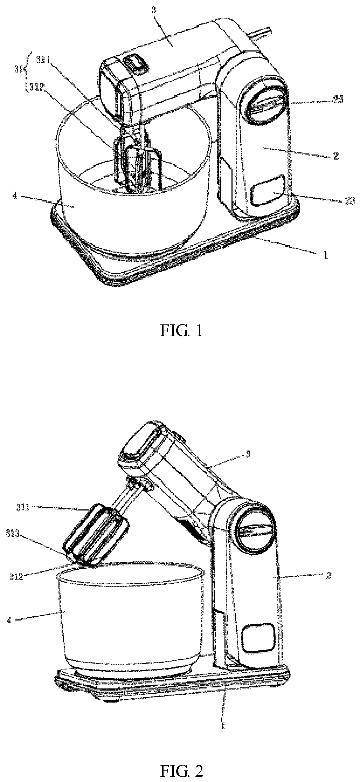

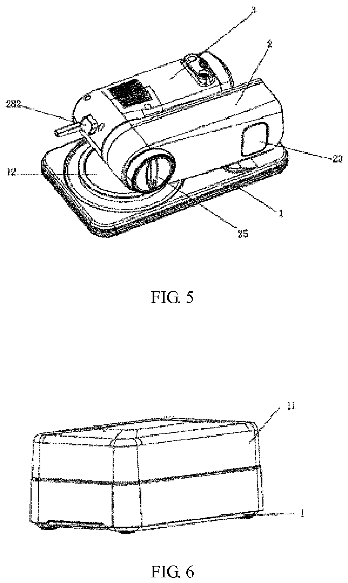

Referring to FIG. 1 to FIG. 10, the present invention comprises a base 1, a support arm 2 and a handpiece 3. The bottom of the support arm 2 is connected with the base 1 through a folding structure, and the top of the support arm 2 is connected with the tail end of the handpiece 3 through a folding structure. The folding food mixer may be folded in a state as shown in FIG. 5. In order to achieve the effects of preventing dust and oil fume pollution of the folded folding food mixer, referring to FIG. 6, the folding food mixer is provided with a protective cover 11 covered with the base 1. The support arm 2 and the handpiece 3 are covered by the protective cover 11, which is also convenient for storage.

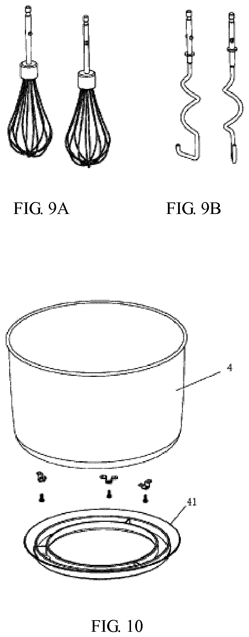

A mixing head 31 used for mixing food is disposed on the handpiece 3, and a motor 32 used for driving the mixing head 31 to rotate is disposed in the handpiece 3. In order to increase the mixing effect, the mixing head 31 comprises a left mixing head 311 and a right mixing head 312 which rotate synchronously. A worm 321 is connected onto a crankshaft of the motor 32. The left side and the right side of the worm 321 are respectively engaged with a left worm wheel 322 and a right worm wheel 323. The left mixing head 311 and the right mixing head 312 are respectively spliced in a hollow wheel axle of the left worm wheel 322 and a hollow wheel axle of the right worm wheel 323. In order to enable the left mixing head 311 and the right mixing head 312 to have a pressing buffer effect and avoid a dead blockage phenomenon caused by that the left mixing head 311 and the right mixing head 312 are contacted with the bottom of a mixing container, a buffer spring 3221 and a buffer spring 3231 are disposed in a hollow wheel axle of the left worm wheel 322 and a hollow wheel axle of the right worm wheel 323. When the motor 32 is working, the left mixing head 311 and the right mixing head 312 rotate synchronously. The left mixing head 311 and the right mixing head 312 are better to have the same structure, can be actually crossed and may not collide. The structure of the left mixing head 311 and the right mixing head 312 may either be the shape shown in FIG. 1, or the structure as shown in FIG. 9A or the structure as shown in FIG. 9B.

In order to hold food conveniently, and be capable of generating rotation while mixing to reinforce the mixing effect, a rotary tray 12 is disposed on the position of the base 1 corresponding to the mixing head 31. A roll ball 121 is disposed between the rotary tray 12 and the base 1. The rotary tray 12 may rotate freely while suffering an external force. For the placing stability of a container holding the food, an annular clamping slot 122 is disposed on the rotary tray 12. The folding food mixer comprises a special-purpose container 4. As shown in FIG. 10, a clamping bottom 41 matched and clamped with the annular clamping slot 122 is disposed at the bottom of the container 4 through a screw. In order to accelerate the rotation of the container 4 during the rotation process of the mixing head 31, a pushing block 313 is clamped at the bottom end of the left mixing head 311 or the right mixing head 312 of the mixing head 31. By pressing the pushing block 313 at the bottom of the container 4, the rotation of the container 4 is accelerated under the effects of the buffer spring 3221 or the buffer spring 3231 and a frictional force.

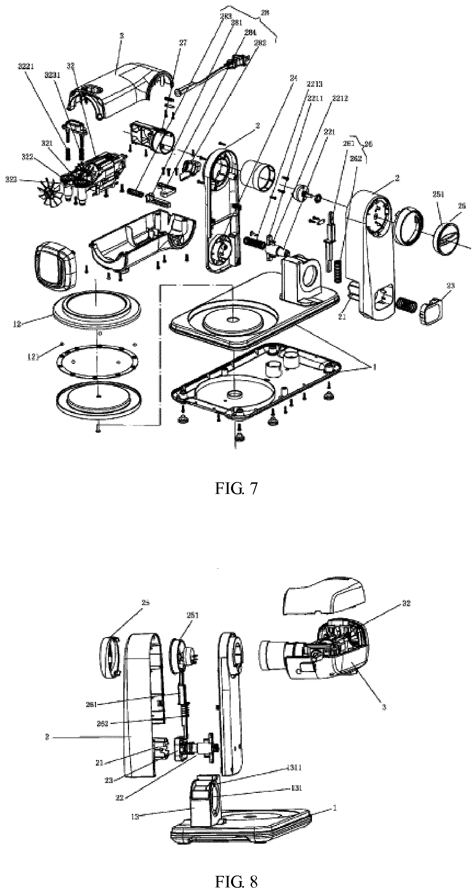

For the stability of the support arm 2 during a process of supporting the handpiece 3 up, as shown in FIG. 7 and FIG. 8, a convex connecting head 13 is disposed on the base 1, and the bottom of the support arm 2 is movably connected with the connecting head 13 through a first rotation shaft 21. An elastic self-locking device 22, and a support arm unlocking button 23 for unlocking the elastic self-locking device 22 are disposed between the connecting head 13 and the support arm 2. The first rotation shaft 21 is a hollow shaft, wherein one end of the first rotation shaft is fixedly connected with the support arm 2, or is in injection moulding at a time with a shell of one side of the support arm 2. The elastic self-locking device 22 comprises a locking pin 221. The tip of the locking pin 221 is connected with the inner side of the support arm unlocking button 23 through the first rotation shaft 21. The side wall of the tail of the locking pin 221 is provided with a convex position-limiting block 2211 and a locking piece 2212. A position-limiting slot 24 matched with the position-limiting block 2211 and limiting the locking pin 221 and a shell of the support arm 2 to only move along the axial direction of the first rotation shaft 21, is disposed on the inside of the shell of the support arm 2. When the first rotation shaft 21 is in injection molding at a time with the shell of one side of the support arm 2, the position-limiting slot 24 may also be disposed on the wall of the first rotation shaft 21. A locking pin return spring 2213 is disposed between the shell of the support arm 2 and the tail of the locking pin 221. A locking slot 1311 matched with the locking piece 2212 is disposed on the wall of the shaft hole 131 of the connecting head 13. When the support arm 2 rotates and is vertically erected on the base 1, the locking pin 221 pushes the locking piece 2212 into the locking slot 1311 under the effect of the elastic force of the locking pin return spring 2213, thus limiting rotation occurred between the support arm 2 and the base 1. When the folding food mixer requires folding, the support arm unlocking button 23 is pressed to push the locking pin 221 to draw back so as to withdraw the locking piece 2212 from the locking slot 1311, so as to achieve the purpose of unlocking.

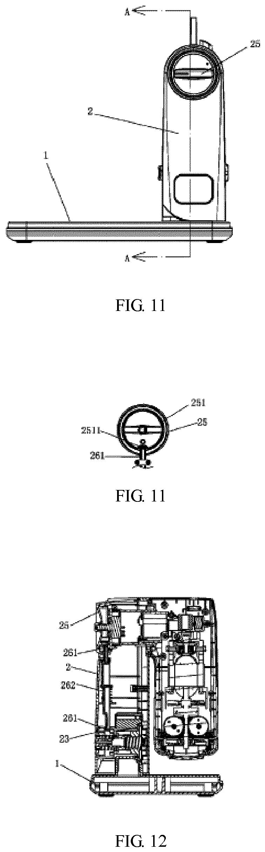

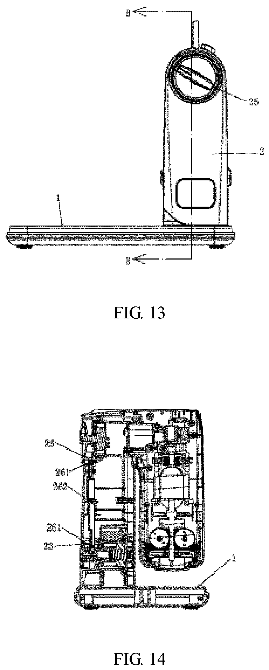

Referring to FIG. 1, and FIG. 7 to FIG. 15, a knob 25 for adjusting and controlling the operation of the motor 32 in the handpiece 3 is disposed on the support arm 2, for example: off gear, first gear, and second gear, wherein the knob 25 as shown in FIG. 11 is under an off gear. A linkage mechanism 26 is disposed between the knob 25 and the support arm unlocking button 23. The linkage mechanism 26 aims at avoiding the occurrence of misoperation to turn on the motor 32, when the support arm 2 is erected on the base 1 in a non-vertical way, to produce safety accident or damage the motor. That is, the support arm unlocking button 23 can only be pressed for unlocking when the knob 25 is at the off gear, and the knob 25 can be only rotated for adjusting when the elastic self-locking device 22 is under a locked state. A specific implementation structure is as follows. The linkage mechanism 26 comprises a linkage 261 disposed between the knob 25 and the support arm unlocking button 23, and a linkage return spring 262 for applying an elastic force on the direction of the knob 25 is sleeved on the linkage 261. The knob 25 is provided with a skirt boarder 251. A concave surface 2511 is disposed on the skirt boarder 251. When the knob 25 points at the off gear, the top end of the linkage 261 is pushed against the concave surface 2511. When the knob 25 is switched to a non-off gear, for example, first gear, second gear, or third gear, the linkage 261 may slip out the concave surface 2511, with the rotation of the skirt boarder 251. During this process, the linkage 261 is moved downwards. However, when the linkage 261 is pushed against the concave surface 2511, the bottom end of the linkage 261 is disposed outside the pressing direction of the support arm unlocking button 23, which is as shown in FIG. 11 and FIG. 12. When the top end of the linkage 261 is pushed against a non-concave surface position, the linkage 261 is moved downwards, then the bottom end of the linkage 261 will be blocked on the pressing direction of the support arm unlocking button 23 to prevent the support arm unlocking button 23 from being pressed. As shown in FIG. 14 and FIG. 15, namely the motor 32 is under a working state, the support arm 2 cannot be folded as well at this time. Meanwhile the misoperation of directly inserting a power supply plug when a switch of the motor 32 is not turned off before the support arm 2 is not unfolded.

In order to ensure the connecting stability between the handpiece 3 and the support arm 2, the top of the support arm 2 and the tail end of the handpiece 3 are movably connected through a second rotation shaft 27. A handpiece locking mechanism 28 is further disposed between the top of the support arm 2 and the tail end of the handpiece 3. The handpiece locking mechanism 28 comprises a latch finger 281 disposed in the handpiece 3, and a handpiece unlocking button 232. The front end of the latch finger 281 protrudes out of the handpiece 3 and is matched and locked with the support arm 2. The tail end of the latch finger 281 is provided with a latch finger return spring 283. The handpiece unlocking button 282 is exposed outside the handpiece 3. A beveling block 284 for pushing the front end of the latch finger 281 to retract in the handpiece 3 in a beveling way is disposed between the handpiece unlocking button 282 and the latch finger 281. When the handpiece unlocking button 282 is pressed, the handpiece unlocking button 282 pushes the beveling block 284. The beveling block 284 and the latch finger 281 push the latch finger to compress the latch finger return spring 283 to draw back in a beveling cooperation way, so as to achieve the purpose of unlocking the handpiece 3 from the support arm 2.

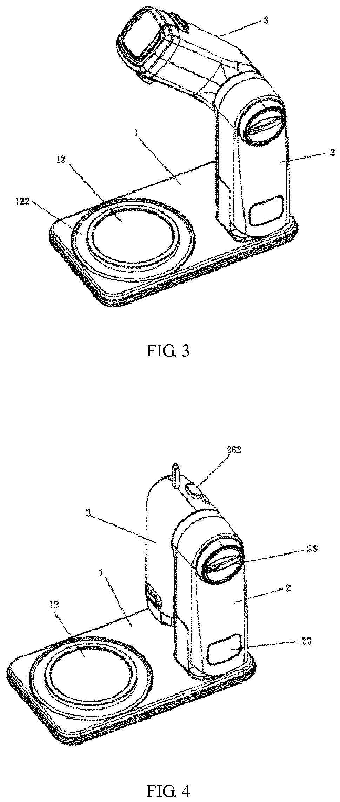

In order to make the handpiece 3 and the support arm 2 occupy small space after being folded, the first rotation shaft 21 and the second rotation shaft 27 are under a parallel state. The height of the support arm 2 is larger than or equal to the length of the handpiece 3, so that the handpiece 3 and the support arm are on the base 1 in parallel, as the state shown in FIG. 4 and FIG. 5.

## Claims

1. A folding food mixer, comprising a base (1), a support arm (2) and a handpiece (3), wherein a mixing head (31) is disposed on the handpiece (3) and a motor (32) for driving the mixing head (31) to rotate is disposed in the handpiece (3) and wherein, the bottom of the support arm (2) is connected with the base (1) through a folding structure, and the top of the support arm (2) is connected with a tail end of the handpiece (3) through a folding structure wherein a convex connecting head (13) is disposed on the base (1), and the bottom of the support arm (2) is movably connected with the connecting head (13) through a first rotation shaft (21); **characterized in that** an elastic self-locking device (22), and a support arm unlocking button (23) for unlocking the elastic self-locking (22) device are disposed between the connecting head (13) and the support arm (2).

2. The folding food mixer according to Claim 1, **characterized in** a knob(25) for adjusting and controlling the operation of the handpiece(3) is disposed on the support arm(2); a linkage(261) mechanism(26) for enabling the support arm unlocking button(23) to be only pressed for unlocking when the knob(25) is at an off gear or enabling the knob(25) to be only rotated for adjusting when the elastic self-locking device(22) is under a locked state, is disposed between the knob(25) and the support arm unlocking button(23).

3. The folding food mixer according to Claim 2, **characterized in** the linkage(261) mechanism(26) comprises a linkage(261) disposed between the knob(25) and the support arm unlocking button(23), and a linkage return spring(262) for applying an elastic force on the direction of the knob(25) is sleeved on the linkage(261); the knob(25) is provided with a skirt boarder(251); a concave surface(2511) against which the top end of the linkage(261) is pushed when the knob(25) points at the off gear, is disposed on the skirt boarder(251); when the top end of the linkage(261) is pushed on a non-concave surface(2511) on the skirt boarder(251) of the knob, the bottom end of the linkage(261) is blocked on the pressing direction of the support arm unlocking button(23).

4. The folding food mixer according to Claim 1, **characterized in** the first rotation shaft(21) is a hollow shaft; the elastic self-locking device(22) comprises a locking pin(221); the tip of the locking pin(221) is connected with the inner side of the support arm unlocking button(23) through the first rotation shaft(21); the side wall of the tail of the locking pin(221) is provided with a convex position-limiting block(2211) and a locking piece(2212); and a position-limiting slot(24) matched with the position-limiting block(2211) and limiting the locking pin(221) and a shell of the support arm(2) to only move along the axial direction of the first rotation shaft(21), is disposed on the inside of the shell of the support arm(2); a locking pin return spring(2213) is disposed between the shell of the support arm(2) and the tail of the locking pin(221); and a locking slot(1311) matched with the locking piece(2212) of the locking pin(221) when the support arm(2) is vertically erected, for limiting the support arm(2) to rotate, is disposed on the wall of the shaft hole(131) of the connecting head(13).

5. The folding food mixer according to Claim 1, **characterized in** the top of the support arm(2) is movably connected with the tail end of the handpiece(3) through a second rotation shaft(27); moreover, the first rotation shaft(21) and the second rotation shaft(27) are under a parallel state; and the height of the support arm(2) is larger than or equal to the length of the handpiece(3).

6. The folding food mixer according to Claim 1 or 5, **characterized in** a handpiece locking mechanism(28) is further disposed between the top of the support arm(2) and the tail end of the handpiece(3); the handpiece locking mechanism(28) comprises a latch finger(281) disposed in the handpiece(3), and a handpiece unlocking button(232); the front end of the latch finger(281) protrudes out of the handpiece(3) and is matched and locked with the support arm(2); the tail end of the latch finger(281) is provided with a latch finger return spring(283); the handpiece unlocking button(282) is exposed outside the handpiece(3); a beveling block(284) for pushing the front end of the latch finger(281) to retract in the handpiece(3) in a beveling way is disposed between the handpiece unlocking button(282) and the latch finger.

7. The folding food mixer according to Claim 1, **characterized in** the mixing head(31) comprises a left mixing head(311) and a right mixing head(312) which rotate synchronously; a worm(321) is connected onto a crankshaft of the motor(32); the left side and the right side of the worm(321) are respectively engaged with a left worm wheel(322) and a right worm wheel(323); the left mixing head(311) and the right mixing head(312) are respectively spliced in a hollow wheel axle of the left worm wheel(322) and a hollow wheel axle of the right worm wheel(323); moreover, a buffer spring is disposed in the hollow wheel axle.

8. The folding food mixer according to Claim 1, **characterized in** a rotary tray(12) is disposed on the position of the base(1) corresponding to the mixing head(31).

9. The folding food mixer according to Claim 1,**characterized in that** it further comprises a protective cover(11) matched with the base(1) to cover the support arm(2) and the handpiece(3) after the support arm(2) and the handpiece(3) are folded and horizontally placed on the base(1).

## Patentansprüche

1. Klappbare Lebensmittelmischmaschine, umfassend eine Basis (1), einen Trägerarm (2) und ein Handstück (3), wobei ein Mischkopf (31) auf dem Handstück (3) angeordnet ist und ein Motor (32) für einen Drehantrieb des Mischkopfs (31) im Handstück (3) angeordnet ist, und wobei das Unterteil des Trägerarms (2) über eine Klappstruktur mit der Basis (1) verbunden ist und das Oberteil des Trägerarms (2) über eine Klappstruktur mit einem Endstück des Handstücks (3) verbunden ist, wobei ein konvexer Verbindungskopf (13) auf der Basis (1) angeordnet ist und das Unterteil des Trägerarms (2) über eine erste Drehwelle (21) mit dem Verbindungskopf (13) beweglich verbunden ist; **dadurch gekennzeichnet, dass**
eine federnde Selbstverriegelungsvorrichtung (22) und ein Trägerarm-Entriegelungsknopf (23) zum Entriegeln der federnden Selbstverriegelungsvorrichtung (22) zwischen dem Verbindungskopf (13) und dem Trägerarm (2) angeordnet sind.

2. Klappbare Lebensmittelmischmaschine nach Anspruch 1, **dadurch gekennzeichnet, dass** ein Knauf (25) zum Einstellen und Steuern des Betriebs des Handstücks (3) auf dem Trägerarm (2) angeordnet ist; ein Verknüpfungs-(261-)Mechanismus (26) zwischen dem Knauf (25) und dem Trägerarm-Entriegelungsknopf (23) angeordnet ist, um das Drücken des Trägerarm-Entriegelungsknopfs (23) zum Entriegeln nur dann zu ermöglichen, wenn der Knauf (25) in einem Aus-Gang ist, und um das Drehen des Knaufs (25) zum Einstellen nur dann zu ermöglichen, wenn die federnde Selbstverriegelungsvorrichtung (22) in einem verriegelten Zustand ist.

3. Klappbare Lebensmittelmischmaschine nach Anspruch 2, **dadurch gekennzeichnet, dass** der Verknüpfungs-(261-)Mechanismus (26) eine Verknüpfung (261) umfasst, die zwischen dem Knauf (25) und dem Trägerarm-Entriegelungsknopf (23) angeordnet ist, und eine Verknüpfung-Rückstellfeder (262) zum Anlegen einer Federkraft in der Richtung des Knaufs (25) auf der Verknüpfung (261) hülsenartig angeordnet ist; der Knauf (25) mit einer Schürzenumrandung (251) versehen ist; eine konkave Oberfläche (2511), gegen die das obere Ende der Verknüpfung (261) gedrückt wird, wenn der Knauf (25) auf den Aus-Gang zeigt, auf der Schürzenumrandung (251) angeordnet ist; wenn das obere Ende der Verknüpfung (261) auf eine nichtkonkave Oberfläche (2511) auf der Schürzenumrandung (251) des Knaufs geschoben wird, ein unteres Ende der Verknüpfung (261) in Drückrichtung des Trägerarm-Entriegelungsknopfs (23) blockiert wird.

4. Klappbare Lebensmittelmischmaschine nach Anspruch 1, **dadurch gekennzeichnet, dass** die erste Drehwelle (21) eine Hohlwelle ist; die federnde Selbstverriegelungsvorrichtung (22) einen Verriegelungsstift (221) umfasst; die Spitze des Verriegelungsstifts (221) über die erste Drehwelle (21) mit der Innenseite des Trägerarm-Entriegelungsknopfs (23) verbunden ist; die Seitenwand des Endes des Verriegelungsstifts (221) mit einem konvexen Positionsbegrenzungsblock (2221) und einem Verriegelungsstück (2212) versehen ist; und eine Positionsbegrenzungsnut (24), die zum Positionsbegrenzungsblock (2211) passt und den Verriegelungsstift (221) und ein Gehäuse des Trägerarms (2) auf nur eine Bewegung entlang der Axialrichtung der ersten Drehwelle (21) begrenzt, im Inneren des Gehäuses des Trägerarms (2) angeordnet ist; eine Verriegelungsstift-Rückstellfeder (2213) zwischen dem Gehäuse des Trägerarms (2) und dem Ende des Verriegelungsstifts (221) angeordnet ist; und eine Verriegelungsnut (1311), die zum Verriegelungsstück (2212) des Verriegelungsstifts (221) passt, wenn der Trägerarm (2) vertikal aufgestellt ist, zum Begrenzen der Drehung des Trägerarms (2) an der Wand des Wellenlochs (131) des Verbindungsknopfs (13) angeordnet ist.

5. Klappbare Lebensmittelmischmaschine nach Anspruch 1, **dadurch gekennzeichnet, dass** das Oberteil des Trägerarms (2) über eine zweite Drehwelle (27) mit dem Endstück des Handstücks (3) beweglich verbunden ist; außerdem die erste Drehwelle (21) und die zweite Drehwelle (27) in einem parallelen Zustand vorliegen; und die Höhe des Trägerarms (2) größer gleich der Länge des Handstücks (3) ist.

6. Klappbare Lebensmittelmischmaschine nach Anspruch 1 oder 5, **dadurch gekennzeichnet, dass** ein Handstück-Verriegelungsmechanismus (28) ferner zwischen dem Oberteil des Trägerarms (2) und dem Endstück des Handstücks (3) angeordnet ist; der Handstück-Verriegelungsmechanismus (28) einen Verriegelungsfinger (281), der im Handstück (3) angeordnet ist, und einen Handstück-Entriegelungsknopf (232) umfasst; das vordere Ende des Verriegelungsfingers (281) aus dem Handstück (3) hervorsteht und zum Trägerarm (2) passt und mit diesem verriegelt ist; das Endstück des Verriegelungsfingers (281) mit einer Verriegelungsfinger-Rückstellfeder (283) versehen ist; der Handstück-Entriegelungsknopf (282) außerhalb des Handstücks freigelegt ist; ein Abschrägungsblock (284) zum Schieben des vorderen Endes des Verriegelungsfingers (281), so dass es im Handstück (3) eingezogen wird, auf abschrägende Weise zwischen dem Handstück-Entriegelungsknopf (282) und dem Verriegelungsfinger angeordnet ist.

7. Klappbare Lebensmittelmischmaschine nach Anspruch 1, **dadurch gekennzeichnet, dass** der Mischkopf (31) einen linken Mischkopf (311) und einen rechten Mischkopf (312) umfasst, die sich synchron drehen; eine Schnecke (321) auf eine Kurbelwelle des Motors (32) verbunden ist; die linke Seite und die rechte Seite der Schnecke (321) mit einem linken Schneckenrad (322) bzw. einem rechten Schneckenrad (323) in Eingriff stehen; der linke Mischkopf (311) und der rechte Mischkopf (312) in einer Hohlradachse des linken Schneckenrads (322) bzw. einer Hohlradachse des rechten Schneckenrads (323) gespleißt sind; außerdem eine Pufferfeder in der Hohlradachse angeordnet ist.

8. Klappbare Lebensmittelmischmaschine nach Anspruch 1, **dadurch gekennzeichnet, dass** eine Drehschale (12) in der Position der Base (1) angeordnet ist, die dem Mischkopf (31) entspricht.

9. Klappbare Lebensmittelmischmaschine nach Anspruch 1, **dadurch gekennzeichnet, dass** sie ferner eine Schutzabdeckung (11) umfasst, die zur Base (1) passt, um den Trägerarm (2) und das Handstück (3) abzudecken, nachdem der Trägerarm (2) und das Handstück (3) eingeklappt und horizontal auf der Basis (1) platziert wurden.

## Revendications

1. Batteur mélangeur alimentaire pliable comprenant une base (1), un bras support (2) et une pièce à main (3), une tête de mélange (31) étant disposée sur la pièce à main (3) et un moteur (32) destiné à faire tourner la tête de mélange (31) étant disposé dans la pièce à main (3), et le bas du bras support (2) étant raccordé à la base (1) via une structure pliante, et le haut du bras support (2) étant raccordé à une extrémité arrière de la pièce à main (3) via une structure pliante, dans lequel
une tête de raccordement convexe (13) est disposée sur la base (1) et le bas du bras support (2) est raccordé de façon mobile à la tête de raccordement (13) via un premier arbre de rotation (21) ;
**caractérisé en ce qu'**un dispositif élastique autobloquant (22) et un bouton de déverrouillage du bras support (23) destiné à déverrouiller le dispositif élastique autobloquant (22) sont disposés entre la tête de raccordement (13) et le bras support (2).

2. Batteur mélangeur alimentaire pliable selon la revendication 1, **caractérisé en ce qu'**un bouton tournant (25) destiné à ajuster et contrôler le fonctionnement de la pièce à main (3) est disposé sur le bras support (2) ; un mécanisme (26) de raccordement (261), destiné à permettre que le bouton de déverrouillage du bras support (23) ne soit pressé pour déverrouillage que lorsque le bouton tournant (25) est en position d'arrêt ou à permettre que le bouton tournant (25) ne puisse être tourné pour ajustement que lorsque le dispositif élastique autobloquant (22) est dans un état verrouillé, est disposé entre le bouton tournant (25) et le bouton de déverrouillage du bras support (23).

3. Batteur mélangeur alimentaire pliable selon la revendication 2, **caractérisé en ce que** le mécanisme (26) de raccordement (261) comprend un raccordement (261) entre le bouton tournant (25) et le bouton de déverrouillage du bras support (23), et un ressort de rappel de raccordement (262) destiné à appliquer une force élastique sur la direction du bouton tournant (25) est emmanché sur le raccordement (261) ; le bouton tournant (25) est muni d'un disque latéral (251) ; une surface concave (2511), contre laquelle l'extrémité supérieure du raccordement (261) est poussée quand le bouton tournant (25) pointe sur la position d'arrêt, est disposée sur le disque latéral (251) ; quand l'extrémité supérieure du raccordement (261) est poussée sur une surface non-concave (2511) sur le disque latéral (251) du bouton tournant, l'extrémité inférieure du raccordement (261) est verrouillée en position de pressage sur le bouton de déverrouillage du bras support (23).

4. Batteur mélangeur alimentaire pliable selon la revendication 1, **caractérisé en ce qu'**il y a un arbre creux dans le premier arbre de rotation (21) ; le dispositif élastique autobloquant (22) comprend une broche de verrouillage (221) ; la pointe de la broche de verrouillage (221) est raccordée au côté interne du bouton de déverrouillage du bras support (23) à travers le premier arbre de rotation (21) ; la paroi latérale de la queue de la broche de verrouillage (221) est munie d'un bloc convexe de limitation de position (2211) et d'une pièce de verrouillage (2212) ; et d'une fente de limitation de position (24), assortie au bloc de limitation de position (2211) et restreignant la broche de verrouillage (221) et un boîtier du bras support (2) pour limiter le mouvement à la direction axiale du premier arbre de rotation (21), est disposée sur l'intérieur du boîtier du bras support (2) ; un ressort de rappel de la broche de verrouillage (2213) est disposé entre le boîtier du bras support (2) et la queue de la broche de verrouillage (221) ; et une fente de verrouillage (1311), assortie à la pièce de verrouillage (2212) de la broche de verrouillage (221) quand le bras support (2) est levé en position verticale, pour restreindre la rotation du bras support (2), est disposée sur la paroi de l'orifice d'arbre (131) de la tête de raccordement (13).

5. Batteur mélangeur alimentaire pliable selon la revendication 1, **caractérisé en ce que** le sommet du bras support (2) est raccordé de façon mobile à l'extrémité arrière de la pièce à main (3) via un second arbre de rotation (27) ; de plus, le premier arbre de rotation (21) et le second arbre de rotation (27) sont dans un état parallèle ; et la hauteur du bras support (2) est supérieure ou égale à la longueur de la pièce à main (3).

6. Batteur mélangeur alimentaire pliable selon la revendication 1 ou 5, **caractérisé en ce qu'**un mécanisme de verrouillage de la pièce à main (28) est, en outre, disposé entre le haut du bras support (2) et l'extrémité arrière de la pièce à main (3) ; le mécanisme de verrouillage de la pièce à main (28) comprend un cliquet (281) disposé dans la pièce à main (3) et un bouton de déverrouillage de la pièce à main (232) ; l'extrémité avant du cliquet (281) dépasse de la pièce à main (3) et s'associe et se verrouille au bras support (2) ; l'extrémité arrière du cliquet (281) est munie d'un ressort de rappel du cliquet (283) ; le bouton de déverrouillage de la pièce à main (282) est exposé hors de la pièce à main (3) ; un bloc biseauté (284) destiné à pousser l'extrémité avant du cliquet (281) afin de le rétracter dans la pièce à main (3) de façon biseautée est disposé entre le bouton de déverrouillage de la pièce à main (282) et le cliquet.

7. Batteur mélangeur alimentaire pliable selon la revendication 1, **caractérisé en ce que** la tête de mélange (31) comprend une tête de mélange gauche (311) et une tête de mélange droite (312) qui tourne de façon synchrone ; une vis sans fin (321) est raccordée sur un vilebrequin du moteur (32) ; le côté gauche et le côté droit de la vis sans fin (321) sont engagés respectivement avec une roue hélicoïdale gauche (322) et une roue hélicoïdale droite (323) ; la tête de mélange gauche (311) et la tête de mélange droite (312) sont respectivement raccordées dans un axe de roue creux de la roue hélicoïdale gauche (322) et un axe de roue creux de la roue hélicoïdale droite (323) ; de plus, un ressort amortisseur est disposé dans l'axe de roue creux.

8. Batteur mélangeur alimentaire pliable selon la revendication 1, **caractérisé en ce qu'**un plateau tournant (12) est disposé sur la position de la base (1) correspondant à la tête de mélange (31) .

9. Batteur mélangeur alimentaire pliable selon la revendication 1, **caractérisé en ce qu'**il comprend en outre un couvercle de protection (11) assorti à la base (1) pour couvrir le bras support (2) et la pièce à main (3) après que le bras support (2) et la pièce à main (3) sont pliés et placés horizontalement sur la base (1).
